# FASCICULE DE BREVET EUROPEEN

(11) **EP 1 613 413 B1**
(45) Date de publication et mention de la délivrance du brevet: **14.12.2011**
(21) Numéro de dépôt: 04722882.0
(22) Date de dépôt: 24.03.2004
(51) Int. Cl.: B01D 53/047

(54) **SYSTEME EMBARQUE DE PRODUCTION DE FLUX GAZEUX ENRICHI EN OXYGENE ET PROCEDE POUR ALIMENTER LES VOIES AERIENNES D'OCCUPANTS DANS UN AERONEF**
BORDSYSTEM ZUR HERSTELLUNG EINES MIT SAUERSTOFF ANGEREICHERTEN GASES UND VERFAHREN ZUR VERSORGUNG DER LUFTWEGE VON FLUGZEUGPASSAGIEREN
CARRIER-BORNE SYSTEM FOR THE PRODUCTION OF OXYGEN-ENRICHED GAS STREAMS AND METHOD FOR SUPPLYING THE AIRWAYS OF THE OCCUPANTS OF AN AIRCRAFT

(30) Priorité: 02.04.2003 FR 0304106
(43) Date de publication de la demande: 11.01.2006
(73) Titulaire: L'AIR LIQUIDE, Société Anonyme pour l'Etude et l'Exploitation des Procédés Georges Claude, 75007 Paris (FR)
(72) Inventeur: LESSI, Stéphane, 19711 Newark, DE (US); SCHMUTZ, Nicolas, 75011 Paris (FR)
(74) Mandataire: Le Moenner, Gabriel
(86) Numéro de dépôt international: PCT/FR2004/050123
(87) Numéro de publication internationale: WO 2004/089510

(56) Documents cités:
- EP-A- 1 230 967
- EP-A- 1 243 328
- EP-A- 1 316 357
- WO-A-00/40332

## Description

La présente invention concerne les systèmes et procédés de production d'un flux gazeux enrichi en oxygène à partir d'air atmosphérique pour la fourniture à des passagers et un équipage d'aéronef.

Les concentrateurs d'oxygène embarqués pour aéronefs, généralement désignés sous l'acronyme OBOGS, mettent classiquement en oeuvre des procédés d'adsorption à pression alternée, dits PSA ou VPSA, utilisant des adsorbants capables de séparer les constituants de l'air.

Il est connu, à cet effet, d'utiliser des adsorbants de type zéolithe X ou A ayant une affinité élevée pour l'azote et donc capables de fournir un mélange enrichi en oxygène, jusqu'à une teneur n'excédant toutefois pas, pour les meilleurs, 95%, en raison de la teneur en argon présent dans l'agir atmosphérique.

Pour fournir de l'oxygène à une teneur supérieure à 95%, il a été proposé, notamment dans US-A-4,566,881 (BWV), d'utiliser des adsorbeurs en cascade, suivant des agencements mal adaptés en dimensions, poids et complexité de circuits pour des applications embarquées.

On sait d'autre part que les zéolithes échangées avec des cations argent, connues depuis longtemps (cf. US-A-3,331,190 - Dow Chemical), permettent notamment d'améliorer la séparation de l'oxygène et de l'azote (cf. WO-A-00/40332 - University of Michigan) ou de séparer l'argon de l'oxygène (cf. WO-A-94/06541 - Arbor Research Corp). Aucune indication quant à la possible utilisation de tel adsorbants dans des concentrateurs type OBOGS n'a toutefois été suggérée.

La présente invention a pour objet de proposer un procédé pour la production d'un flux gazeux fortement enrichi en oxygène optimisé en masse et en volume embarqués et convenant à divers types d'aéronefs, en particulier à des aéronefs civils gros porteurs pour la fourniture de flux importants d'air enrichi en oxygène aux occupants des aéronefs.

Pour ce faire, le système embarqué de production de flux gazeux enrichi en oxygène à partir d'air atmosphérique comporte au moins un adsorbeur comprenant une zéolithe de type faujasite, ayant un rapport Si/Al entre 1 et 1,50, avantageusement entre 1 et 1,25, et échangée à au moins 10% avec de l'argent, avantageusement entre 20 et 60%, plus particulièrement entre 40 et 50% d'ions argent, la zéolite, avantageusement avec des particules fines inférieures à 0,8 mm, étant par exemple une NaX, une CaX ou, de préférence, une zéolithe LiX, avantageusement une LiLSX échangée à plus de 70% en lithium (les zéolithes échangées au lithium, outre leurs excellentes performances pour la séparation de l'azote, permettant de minimiser les teneurs d'échange en ions argent, ces derniers ayant tendance, en présence d'ions lithium, à se fixer sur des sites mieux ciblés pour l'adsorption de l'argon), le taux d'échange en argent étant alors compris entre 20 et 30%. Avantageusement, la zéolithe est une LiAgLSX telle que la somme a+ β des pourcentages α de lithium et β d'argent est comprise entre 0,9 et 1.

La présente invention a pour objet de proposer un procédé de production d'un mélange gazeux fortement enrichi en oxygène à partir d'air atmosphérique mettant en oeuvre au moins un système tel que défini ci-dessous.

Le système et le procédé selon l'invention, permettent, dans des conditions d'exploitation optimisées, d'atteindre des concentrations d'oxygène supérieurs à 98%, typiquement de l'ordre de 99 %, voire proches de 100%, ce qui permet donc d'assurer une excellente compatibilité avec les lignes de distribution d'oxygène des aéronefs actuels qui sont dimensionnés pour des puretés d'oxygène (en bouteilles) de 100%. De plus, un tel niveau de concentration d'oxygène permet d'assurer, sans modification substantielle des conditions d'utilisation, le besoin physiologique des équipages ou passagers d'aéronef à des altitudes de vol élevées, où la teneur en oxygène dans l'air environnant est faible, par exemple en cas de décompression à une altitude de 40 000 pieds (12 000 m) ou, plus généralement, supérieure à 30 000 pieds (10 000 m).

Le système proposé dans le cadre de la présente invention est donc, selon un mode de réalisation préféré, un système OBOGS de type VPSA Vacuum and Pressure Swing Adsorption) comportant au moins une paire d'adsorbeurs fonctionnant de manière alternée à un rythme rapide, typiquement avec un cycle (séquence pressurisation/production/régénération-élution) d'une durée inférieure à 12 secondes, typiquement comprise entre 6 et 10 secondes. Avec un adsorbant LiAgLSX ayant une granulométrie moyenne inférieure à 0,8 mm, de préférence entre 0,6 et 0,7 mm, échangé à 80% en lithium et 20% en argent, pour un avion civil de ligne, ayant typiquement entre 120 et 500 passagers, la quantité de tamis par adsorbeur est comprise entre 1,5 et 15 kg, la pression haute de cycle est comprise entre 500 millibars relatifs et 3 bars relatifs, et la pression basse de cycle est corrélativement comprise entre 100 millibars relatifs et 1 bar relatif. On obtient ainsi, y compris à des altitudes élevées, une production de mélange gazeux fortement enrichi en oxygène, dépassant 97%, permettant une forte dilution avec l'air cabine, autorisant ainsi les débits importants convenant à un grand nombre de passagers, même à des altitudes de vol élevées, le système embarqué VPSA conférant une autonomie illimitée permettant à l'aéronef de croiser, en sûreté, à haute altitude, même en cas de problème dans le système de pressurisation d'air.

## Revendications

1. Procédé pour alimenter les voies aériennes d'au moins une personne se trouvant dans un aéronef avec un flux de gaz enrichi en oxygène produit par adsorption à pression alterné d'air ambiant dans au moins un système OBOGS de type VP5A embarqué de production de flux gazeux fortement enrichi en oxygène à partir d'air atmosphérique, constitué d'au moins un adsorbeur comprenant uniquement une zéolithe de type faujasite ayant un rapport Si/Al entre 1 et 1,50 et échangée à au moins 10% avec de l'argent.

2. Procédé selon la revendication 1, **caractérisé en ce que** l'adsorbant est sous forme de particules ayant une taille moyenne inférieure à 0,8 mm.

3. Procédé selon la revendication 2, **caractérisé en ce que** la zéolithe est une NaX

4. Procédé selon l'une des revendications précédentes, **caractérisé en ce que** le taux d'échange en argent est compris entre 20 et 60%.

5. Procédé selon la revendication 2, **caractérisé en ce que** la zéolithe est une LᵢX.

6. Procédé selon la revendication 5, **caractérisé en ce que** le taux d'échange en argent est compris entre 20 et 30%

7. Procédé selon l'une des revendications 5 et 6, **caractérisé en ce que** le taux d'échange au lithium est supérieur à 70%.

8. Procédé selon l'une des revendications 1 à 7, dans lequel le système est associé à une source d'oxygène gazeux pur sous pression.

9. procédé selon l'une quelconque des revendications 1 à 8 où la pression d'admission d'air n'excède pas 3 bars relatifs.

10. Procédé selon la revendication 9, où la pression de désorption est supérieure à 0,100 bar relatif.

11. Procédé selon l'une des revendications 1 à 10, **caractérisé en ce que** le temps de cycle est inférieur à 10 secondes.

12. Procédé selon l'une des revendications 1 à 11, **caractérisé en ce que** la teneur en oxygène du flux de gaz enrichi est supérieure à 98 %.

13. Procédé selon la revendication 1, **caractérisé en ce que** le système est un système OBOGS de type VPSA (Vacuum and Pressure Swing Adsorption) comportant au moins une paire d'adsorbeurs fonctionnant de manière alternée à un rythme rapide, avec un cycle (séquence pressurisation/production/régénération-élution) d'une durée inférieure à 12 secondes, typiquement comprise entre 6 et 10 secondes, l'absorbant étant un adsorbant LiAgl-SX ayant une granulométrie moyenne inférieure à 0,8 mm, de préférence entre 0,6 et 0,7 mm, échangé à 80% en lithium et 20% en argent, la quantité de tamis par adsorbeur étant comprise entre 1,5 et 15 kg, la pression haute de cycle est comprise entre 500 millibars relatifs et 3 bars relatifs, et la pression basse de cycle est corrélativement comprise entre 100 millibars relatifs et 1 bar relatif.

## Claims

1. Method for supplying the airways of at least one person located in an aircraft with an oxygen-enriched gas stream produced by pressure swing adsorption of ambient air in at least one on-board VPSA-type OBOGS system for producing highly oxygen-enriched gaseous streams from atmospheric air, the system consisting of at least one adsorber comprising only a faujasite-type zeolite which has a Si/Al ratio of between 1 and 1.50 and is exchanged to at least 10 % with silver.

2. Method according to claim 1, **characterised in that** the adsorbent is in the form of particles having a mean size of less than 0.8 mm.

3. Method according to claim 2, **characterised in that** the zeolite is a NaX zeolite.

4. Method according to any one of the preceding claims, **characterised in that** the degree of exchange with silver is between 20 and 60 %.

5. Method according to claim 2, **characterised in that** the zeolite is a LᵢX zeolite.

6. Method according to claim 5, **characterised in that** the degree of exchange with silver is between 20 and 30 %.

7. Method according to either claim 5 or claim 6, **characterised in that** the degree of exchange with lithium is greater than 70 %.

8. Method according to any one of claims 1 to 7, wherein the system is connected to a source of pure gaseous oxygen under pressure.

9. Method according to any one of claims 1 to 8, wherein the air intake pressure does not exceed 3 bar relative.

10. Method according to claim 9, wherein the desorption pressure is greater than 0.100 bar relative.

11. Method according to any one of claims 1 to 10, **characterised in that** the cycle time is less than 10 seconds.

12. Method according to any one of claims 1 to 11, **characterised in that** the oxygen content of the enriched gas stream is greater than 98 %.

13. Method according to claim 1, **characterised in that** the system is a VPSA-type (Vacuum and Pressure Swing Adsorption) OBOGS system comprising at least one pair of adsorbers operating alternately at a rapid rhythm with a cycle (pressurisation/production/regeneration-elution sequence) lasting less than 12 seconds, typically between 6 and 10 seconds, the adsorbent being an LiAgLSX adsorbent having a mean particle size of less than 0.8 mm, preferably between 0.6 and 0.7 mm, exchanged to 80 % with lithium and exchanged to 20 % with silver, the sieve yield per adsorber being between 1.5 and 15 kg, the cycle high pressure being between 500 millibar relative and 3 bar relative, and the cycle low pressure being correlatively between 100 millibar relative and 1 bar relative.

## Patentansprüche

1. Verfahren zur Versorgung der Atemwege wenigstens einer sich in einem Luftfahrzeug befindenden Person mit einem mit Sauerstoff angereicherten Gasstrom, der durch Druckwechseladsorption aus Umgebungsluft in wenigstens einem OBOGS Bordsystem vom Typ VPSA zur Erzeugung eines stark mit Sauerstoff angereicherten Gasstroms aus atmosphärischer Luft erzeugt wird, wobei das System mindestens einen Adsorber umfasst, der nur einen Zeolith vom Typ Faujasit enthält und der Zeolith ein Si/Al Verhältnis zwischen 1 und 1,50 aufweist und zu mindestens 10 % durch Silber ausgetauscht ist.

2. Verfahren nach Anspruch 1, **dadurch gekennzeichnet, dass** das Adsorbens in Form von Teilchen mit einer mittleren Größe unter 0,8 mm vorliegt.

3. Verfahren nach Anspruch 2, **dadurch gekennzeichnet, dass** der Zeolith ein NaX-Zeolith ist.

4. Verfahren nach einem der vorhergehenden Ansprüche, **dadurch gekennzeichnet, dass** der Grad des Austausches durch Silber zwischen 20 und 60 % liegt.

5. Verfahren nach Anspruch 2, **dadurch gekennzeichnet, dass** der Zeolith ein LᵢX-Zeolith ist.

6. Verfahren nach Anspruch 5, **dadurch gekennzeichnet, dass** der Grad des Austausches durch Silber zwischen 20 und 30 % liegt.

7. Verfahren nach Anspruch 5 oder 6, **dadurch gekennzeichnet, dass** der Grad des Austausches mit Lithium höher ist als 70 %.

8. Verfahren nach Anspruch 1 bis 7, wobei das System mit einer Quelle reinen gasförmigen Sauerstoffs unter Druck verbunden ist.

9. Verfahren nach Anspruch 1 bis 8, wobei der Lufteinlassdruck 3 bar relativ nicht übersteigt.

10. Verfahren nach Anspruch 9, wobei der Desorptionsdruck größer ist als 0,100 bar relativ.

11. Verfahren nach Anspruch 1 bis 10, **dadurch gekennzeichnet, dass** die Zykluszeit 10 Sekunden unterschreitet.

12. Verfahren nach Anspruch 1 bis 11, **dadurch gekennzeichnet, dass** der Sauerstoffgehalt des angereicherten Gasstroms 98 % übersteigt.

13. Verfahren nach Anspruch 1, **dadurch gekennzeichnet, dass** das System ein OBOGS-System vom Typ VPSA (Vacuum and Pressure Swing Adsorption) ist, das mindestens ein Paar wechselweise in raschem Rhythmus funktionierende Adsorber mit einem Zyklus (Sequenz Druckbeaufschlagung/Erzeugung/Regeneration-Elution) mit einer Dauer von unter 12 Sekunden, typischerweise zwischen 6 und 10 Sekunden, umfasst, wobei das Adsorbens ein LiAgLSX-Adsorbens ist, das eine mittlere Korngröße von unter 0,8 mm, bevorzugt zwischen 0,6 und 0,7 mm, hat und zu 80 % mit Lithium und zu 20 % mit Silber ausgetauscht ist, wobei die Siebmenge pro Adsorber zwischen 1,5 und 15 kg liegt, der hohe Zyklusdruck zwischen 500 millibar relativ und 3 bar relativ liegt und der niedrige Zyklusdruck korrelativ zwischen 100 millibar relativ und 1 bar relativ liegt.
